# EUROPÄISCHE PATENTSCHRIFT

(11) **EP 3 280 588 B1**
(45) Veröffentlichungstag und Bekanntmachung des Hinweises auf die Patenterteilung: **10.04.2019**
(21) Anmeldenummer: 16707412.9
(22) Anmeldetag: 26.02.2016
(51) Int. Cl.: B31F 1/28

(54) **VORRICHTUNG ZUR PAPPESPEICHERUNG UND -ENTFERNUNG FÜR EINE BRÜCKE IN EINER WELLPAPPE-PRODUKTIONSLINIE**
DEVICE FOR STORING AND REMOVING CARDBOARD FOR A BRIDGE IN A CORRUGATED CARDBOARD PRODUCTION LINE
DISPOSITIF SERVANT À STOCKER ET À ENLEVER DU CARTON POUR UN PONT DANS UNE LIGNE DE PRODUCTION DE CARTON ONDULÉ

(30) Priorität: 09.04.2015 CN 201520213017 U
(43) Veröffentlichungstag der Anmeldung: 14.02.2018
(73) Patentinhaber: BHS Corrugated Maschinen- und Anlagenbau GmbH, 92729 Weiherhammer (DE)
(72) Erfinder: GNAN, Alfons, 92249 Vilseck (DE); SCHARNAGL, Robert, 92720 Schwarzenbach (DE); BAUERNFEIND, Michael, 92720 Schwarzenbach (DE)
(74) Vertreter: Rau, Schneck & Hübner Patentanwälte Rechtsanwälte PartGmbB
(86) Internationale Anmeldenummer: PCT/EP2016/054112
(87) Internationale Veröffentlichungsnummer: WO 2016/162142

(56) Entgegenhaltungen:
- US-A- 4 266 998
- US-A- 4 288 273
- US-A- 4 566 922

## Beschreibung

Die vorliegende Patentanmeldung nimmt die Priorität der chinesischen Gebrauchsmusteranmeldung CN 2015 2021 3017.5 in Anspruch, deren Inhalt durch Bezugnahme hierin aufgenommen wird.

### Technischer Bereich

Die Erfindung betrifft eine Maschine, insbesondere mit einer Wellpappe-Bearbeitungsvorrichtung, und insbesondere mit einer Vorrichtung zur Pappespeicherung und -entfernung für eine Brücke in einer Wellpappe-Produktionslinie. Die Erfindung betrifft auch ein entsprechendes Verfahren.

### Hintergrund

In einer Wellpappe-Produktionslinie ist eine einseitig kaschierte Wellpappebahn in Schleifenform auf einer Brücke gespeichert, die eine Faltung oder Markierung auf der Oberfläche der Pappebahn erzeugt. Außerdem können Spleißfehler oder andere Ausschüsse, die sich auf der Brücke sammeln, nicht bequem und rechtzeitig entfernt werden, was die Produktivität beeinträchtigt.

Die US 4,566,922 offenbart eine gattungsgemäße Bahnspannungs- und Speichereinrichtung einer Wellpappeanlage. Unmittelbar stromaufwärts zur Bahnspannungs- und Speichereinrichtung ist eine Spleißeinrichtung angeordnet. Wenn ein Bahnfehler erkannt wird, trennt die Spleißeinrichtung eine der beiden Lagen einer Wellpappebahn, stoppt den Materialeintritt in den Speicher, sondert den fehlerhaften Teil der Lage aus, verbindet den gegenüberliegenden Rest und schneidet Enden der Lage, um eine perfekte Lage zu bilden. Mit dieser Bahnspannungs- und Speichereinrichtung sind Beschädigungen der Wellpappebahn nicht ausschließbar.

Die US 4,266,998 und US 4,288,273 offenbaren Brücken von Wellpappeanlagen.

### Zusammenfassung

Die Aufgabe der Erfindung liegt darin, eine Vorrichtung zur Pappespeicherung und -entfernung bzw. -entsorgung für eine Brücke in einer Wellpappe-Produktionslinie bereitzustellen, um die bestehenden Probleme zu lösen, dass die einseitig kaschierte Wellpappebahn auf der Brücke gefaltet wird und die Ausschüsse auf der Brücke nicht bequem und rechtzeitig entfernbar sind. Ein entsprechendes Verfahren soll außerdem geschaffen werden.

Diese Aufgabe wird durch den Anspruch 1 und 11 gelöst.

Eine Vorrichtung zur Pappespeicherung und -entfernung für eine Brücke in einer Wellpappe-Produktionslinie gemäß der Erfindung umfasst eine Brücke mit einer planaren Fläche auf der Oberseite, wobei eine Fördereinrichtung zur Förderung einer einseitig kaschierten Wellpappebahn, die ein parallel zu der planaren Fläche verlaufendes Förderband zur Förderung der einseitig kaschierten Wellpappebahn umfasst, oberhalb der Brücke angeordnet ist.

Soweit hier der Ausdruck "Pappe" benutzt wird, ist bevorzugt Wellpappe gemeint. Die einseitig kaschierte Wellpappebahn ist vorzugsweise endlos. Sie hat günstigerweise eine glatte Deckbahn/Kaschierbahn und eine gewellte Wellbahn, die miteinander verleimt sind.

Die Fördereinrichtung zur Förderung der einseitig kaschierten Wellpappebahn hat ein Eingangsende und ein Ausgangsende, wo eine Klemm- und Schneideinheit vorgesehen ist. Die Klemm- und Schneideinheit hat günstigerweise ein der einseitig kaschierten Wellpappebahn zugeordnetes Klemmteil und Schneidteil, die vorzugsweise unabhängig voneinander betätigbar bzw. verlagerbar sind.

Außerhalb bzw. stromabwärts des Ausgangsendes der Fördereinrichtung zur Förderung der einseitig kaschierten Wellpappebahn sind eine erste Pappe-Führungswalze und eine zweite Pappe-Führungswalze vorgesehen, die mit einem vertikalen Abstand dazwischen aufeinander ausgerichtet bzw. angeordnet sind.

Eine Trennplatte, die parallel zu der Laufrichtung des Förderbands zur Förderung der einseitig kaschierten Wellpappebahn verläuft, ist unterhalb der Fördereinrichtung zur Förderung der einseitig kaschierten Wellpappebahn vorgesehen.

Eine bewegliche bzw. verlagerbare Pappespeicher-Wageneinheit ist auf der Brücke unterhalb der Fördereinrichtung zur Förderung der einseitig kaschierten Wellpappebahn unter Bildung eines Gleitpaars mit der Brücke vorgesehen.

Eine Antriebseinrichtung steht in Verbindung mit der beweglichen Pappespeicher-Wageneinheit, die eine erste Pappe-Speicherwalze und eine zweite Pappe-Speicherwalze umfasst, die mit einem vertikalen Abstand zueinander aufeinander ausgerichtet bzw. angeordnet sind.

Die erste Pappe-Führungswalze, die erste Pappe-Speicherwalze, die zweite Pappe-Führungswalze und die zweite Pappe-Speicherwalze sind längs der vertikalen Richtung mit einem vertikalen Abstand zwischen diesen aufeinanderfolgend angeordnet.

In der Brücke ist unterhalb der beweglichen Pappepeicher-Wageneinheit eine Förderband-Einrichtung vorgesehen, wobei benachbart zu einem Ende derselben außerdem eine Öffnung in der Brücke vorgesehen ist.

Eine Klappe, unter welcher sich ein Ausschuss-Pappesammelwagen befindet, ist in/bei der Öffnung vorgesehen.

Günstigerweise ist das Förderband der Fördereinrichtung zur Förderung der einseitig kaschierten Wellpappebahn umlaufend. Es ist vorzugsweise angetrieben. Es ist insbesondere im Stande, die einseitig kaschierte Wellpappebahn zu der Klemm- und Schneideinheit zu fördern. Das Förderband fördert vorzugsweise die einseitig kaschierte Wellpappebahn von einem Führungs-Gestellmittel zu der Klemm- und Schneideinheit.

Die erste Pappe-Führungswalze und die zweite Pappe-Führungswalze sind günstigerweise jeweils drehbar gelagert. Sie sind insbesondere im Stande, die einseitig kaschierte Wellpappebahn zu führen bzw. umzulenken. Es ist von Vorteil, wenn die erste und/oder zweite Pappe-Führungswalze ortsfest, das heißt insbesondere nicht senkrecht zu ihrer Lagerachse verlagerbar, ist.

Die Trennplatte hat vorzugsweise eine geschlossene Oberfläche. Alternativ ist diese von mindestens einer Öffnung durchsetzt. Es ist zweckmäßig, wenn die Trennplatte eben ausgeführt ist. Alternativ ist diese uneben. Die Trennplatte ist im Einsatz insbesondere im Stande, zu verhindern, dass ein durch die Fördereinrichtung zur Förderung der einseitig kaschierten Wellpappebahn geförderter erster Abschnitt der einseitig kaschierten Wellpappebahn und ein in der Förderband-Einrichtung geförderter zweiter Abschnitt der einseitig kaschierten Wellpappebahn nicht dabei in Kontakt miteinander gelangen, was zu deren Beschädigung bzw. der Beschädigung der einseitig kaschierten Wellpappebahn führen kann. Die Trennplatte sorgt somit für eine räumliche Trennung dieser Abschnitte. Dies gilt insbesondere beim Anfahren der Vorrichtung zur Pappespeicherung und - entfernung.

Die Pappespeicher-Wageneinheit bildet günstigerweise einen Tänzer. Sie umfasst die Pappe-Speicherwalzen, die insbesondere dort jeweils drehbar gelagert sind. Durch Verlagerung der Pappespeicher-Wageneinheit sind quasi so auch die Pappe-Speicherwalzen verlagerbar.

Die Förderband-Einrichtung umfasst günstigerweise ein umlaufendes Förderband. Die Förderband-Einrichtung dient zur Förderung der einseitig kaschierten Wellpappebahn, insbesondere des tauglichen und fehlerhaften Stücks der einseitig kaschierten Wellpappebahn. Sie ist bezogen auf die Förderrichtung der einseitig kaschierten Wellpappebahn bevorzugt stromabwärts zu der Fördereinrichtung zur Förderung der einseitig kaschierten Wellpappebahn angeordnet.

Das Förderband der Förderband-Einrichtung ist günstigerweise vorwärts und rückwärts antreibbar. Ein einzelnes Stück der einseitig kaschierten Wellpappebahn ist so beispielsweise ausschleusbar.

Die Öffnung ist günstigerweise seitlich benachbart neben der Förderband-Einrichtung angeordnet. Sie erstreckt sich vorzugsweise in einer horizontalen Ebene.

Es ist von Vorteil, wenn die Klappe, insbesondere um eine horizontale Schwenkachse, verschwenkbar ist. Günstigerweise ist die Klappe zwischen einer Öffnungsstellung und einer Schließstellung beweglich. In der Öffnungsstellung gibt die Klappe vorzugsweise die Öffnung frei, während in der Schließstellung die Klappe die Öffnung günstigerweise verschließt. Vorzugsweise ist über die Öffnung in der Öffnungsstellung schadhafte Wellpappe abgebbar.

Der Ausschuss-Pappesammelwagen kann eine beliebige Gestalt haben. Er weist vorzugsweise Räder zur Abstützung gegenüber einem Untergrund, wie einem Boden, auf. Alternativ ist dieser ohne Räder ausgeführt. Der Ausschuss-Pappesammelwagen kann mit oder ohne eigenem Antrieb sein.

Das Arbeitsprinzip der vorliegenden Ausführungsform ist wie folgt: das Eingangsende der Fördereinrichtung zur Förderung der einseitig kaschierten Wellpappebahn wird benachbart zu dem Ausgang der Produktionsmaschine zur Herstellung der einseitig kaschierten Wellpappebahn angeordnet, die die einseitig kaschierte Wellpappebahn ausgibt;
die von der Produktionsmaschine zur Herstellung der einseitig kaschierten Wellpappebahn ausgegebene einseitig kaschierte Wellpappebahn wird zu dem Förderband zur Förderung der einseitig kaschierten Wellpappebahn durch ein geneigtes Führungs-Gestellmittel transportiert und die einseitig kaschierte Wellpappebahn wird durch das Förderband zur Förderung der einseitig kaschierten Wellpappebahn zu dem Ausgangsende der Fördereinrichtung zur Förderung der einseitig kaschierten Wellpappebahn transportiert und in die Förderband-Einrichtung weiter transportiert, nachdem diese durch die Klemm- und Schneideinheit gelaufen ist.

Die bewegliche Pappespeicher-Wageneinheit bewegt sich horizontal von dem Ausgangsende zu dem Eingangsende der Fördereinrichtung zur Förderung der einseitig kaschierten Wellpappebahn, wobei die erste Pappe-Speicherwalze und die zweite Pappe-Speicherwalze in der beweglichen Pappespeicher-Wageneinheit die einseitig kaschierte Wellpappebahn der Reihe nach um die erste Pappe-Führungswalze, die erste Pappe-Speicherwalze, die zweite Pappe-Führungswalze und die zweite Pappe-Speicherwalze führen, um die Pappespeicherung zu realisieren.

Wenn die bewegliche Pappespeicher-Wageneinheit die Grenze ihres Wegs erreicht, erreicht die Länge der gespeicherten einseitig kaschierten Wellpappebahn das Maximum.

Wegen der Trennplatte sind die Wellenspitzen der einseitig kaschierten Wellpappebahn vor Beschädigung geschützt und die einseitig kaschierte Wellpappebahn wird selbst nicht beschädigt, falls die Produktionsmaschine zur Herstellung der einseitig kaschierten Wellpappebahn neu gestartet wird.

Falls ein Detektionsmittel einen Spleißfehler oder andere fehlerhafte Stücke detektiert, wird die Klemm- und Schneideinheit gestartet, um einen Weitertransport der einseitig kaschierten Wellpappebahn zu verhindern. In der Zwischenzeit steuert die Steuereinrichtung die bewegliche Pappespeicher-Wageneinheit, um zu dem Ausgangsende der Fördereinrichtung zur Förderung der einseitig kaschierten Wellpappebahn zurückzukehren, und die einseitig kaschierte Wellpappebahn wird durch die Klemm- und Schneideinheit in zwei Stücke geschnitten.

Wegen der Geschwindigkeitsdifferenz zwischen dem Förderband zur Förderung der einseitig kaschierten Wellpappebahn und der Produktionsmaschine zur Herstellung der einseitig kaschierten Wellpappebahn wird das fehlerhafte bzw. schadhafte Stück der einseitig kaschierten Wellpappebahn, das nicht durch die Klemm- und Schneideeinheit gelaufen ist, auf dem Förderband zur Förderung der einseitig kaschierten Wellpappebahn gelassen und bildet dort eine Schleifenform aus; während das taugliche Stück, das durch die Klemm- und Schneideinheit gelaufen ist, durch die bewegliche Pappespeicher-Wageneinheit läuft und die Förderband-Einrichtung verlässt.

Dann ändert die Steuereinrichtung die Förderrichtung der Förderband-Einrichtung und gibt gleichzeitig die Klemm- und Schneideinheit frei. Das fehlerhafte Stück der einseitig kaschierten Wellpappebahn, das auf dem Förderband zur Förderung der einseitig kaschierten Wellpappebahn geblieben ist, bewegt sich vorwärts mit dem Förderband zur Förderung der einseitig kaschierten Wellpappebahn. Wegen dem Wechsel in der Förderrichtung der Förderband-Einrichtung wird das fehlerhafte Stück der einseitig kaschierten Wellpappebahn zu der Position der Klappe gefördert und durch die Öffnung zu dem Ausschuss-Pappesammelwagen transportiert, der unterhalb der Öffnung angeordnet ist.

Nachdem das gesamte fehlerhafte Stück der einseitig kaschierten Wellpappebahn durch die Klemm- und Schneideinheit gegangen ist, startet die Steuereinrichtung die Klemm- und Schneideinheit erneut, um die einseitig kaschierte Wellpappebahn abzuschneiden, und nachdem das fehlerhafte Stück in den Ausschuss-Pappesammelwagen schließlich abgeladen worden ist, ändert die Steuereinrichtung die Förderrichtung der Förderband-Einrichtung erneut, und die taugliche einseitig kaschierte Wellpappebahn wird von der Produktionsmaschine zur Herstellung der einseitig kaschierten Wellpappebahn von der Klemm- und Schneideinheit freigegeben, von der beweglichen Pappespeicher-Wageneinheit gefördert und dann mit einer früheren tauglichen einseitig kaschierten Wellpappebahn verbunden. Und dann fährt die bewegliche Pappespeicher-Wageneinheit fort, um die Speicherfunktion durchzuführen.

Verglichen mit dem Stand der Technik ist die technische Wirkung der vorliegenden Erfindung positiv und signifikant. Gemäß der vorliegenden Erfindung sind eine Fördereinrichtung zur Förderung der einseitig kaschierten Wellpappebahn, eine bewegliche Pappespeicher-Wageneinheit und eine Klemm- und Schneideinheit auf der Brücke außerhalb des Ausgangs der Produktionsmaschine zur Herstellung der einseitig kaschierten Wellpappebahn vorhanden, und eine Förderband-Einrichtung, die die Förderichtung ändern kann, eine Öffnung, und ein Ausschuss-Pappesammelwagen sind unter der Fördereinrichtung zur Förderung der einseitig kaschierten Wellpappebahn vorgesehen.

Die bewegliche Pappespeicher-Wageneinheit speichert die Pappe durch Pappe-Speicherwalzen und die einseitig kaschierte Wellpappebahn ist glatt auf der Brücke haltbar. Falls ein Spleißfehler festgestellt wird, wird das fehlerhafte Stück durch die Klemm- und Schneideinheit herausgeschnitten und der Ausschuss wird zu dem Ausschuss-Pappesammelwagen durch die Öffnung durch die Förderband-Einrichtung ausgegeben, wodurch die Produktivität verbessert wird.

Weitere vorteilhafte Ausgestaltungen sind in den Unteransprüchen angegeben.

Ferner umfasst die Förderband-Einrichtung eine Vorwärts- und Rückwärts-Antriebseinrichtung. Das Förderband ist in eine erste und dazu gegensinnige zweite Richtung antreibbar.

Die Spleißeinrichtung ist günstigerweise teleskopierbar, klappbar und/oder schwenkbar.

Günstigerweise endet bzw. verläuft benachbart zu der Spleißeinrichtung ein Laufsteg, um einen einfachen Zugang zu der Spleißeinrichtung zu ermöglichen.

### Kurzbeschreibung der Zeichnung

Fig. 1 ist eine schematische Ansicht der Vorrichtung zur Pappespeicherung und -entfernung für eine Brücke in der Wellpappe-Produktionslinie der vorliegenden Erfindung.
Fig. 2 ist eine schematische Ansicht des Funktionsprinzips der beweglichen Pappespeicher-Wageneinheit in der Vorrichtung zur Pappespeicherung und -entfernung für eine Brücke in der Wellpappe-Produktionslinie der vorliegenden Erfindung.
Fig. 3 ist eine schematische Ansicht, die ein Schneiden des führenden Endes des fehlerhaften Stücks der einseitig kaschierten Wellpappebahn in der Vorrichtung zur Pappespeicherung und -entfernung für eine Brücke in der Wellpappe-Produktionslinie der vorliegenden Erfindung veranschaulicht.
Fig. 4 ist eine schematische Ansicht, die ein Abführen des fehlerhaften Stücks der einseitig kaschierten Wellpappebahn in der Vorrichtung zur Pappespeicherung und -entfernung für eine Brücke in der Wellpappe-Produktionslinie der vorliegenden Erfindung veranschaulicht.
Fig. 5 ist eine schematische Ansicht, die ein Schneiden des nacheilenden Endes des fehlerhaften Stücks der einseitig kaschierten Wellpappebahn in der Vorrichtung zur Pappespeicherung und -entfernung für eine Brücke in der Wellpappe-Produktionslinie der vorliegenden Erfindung darstellt.
Fig. 6 ist eine schematische Ansicht, die eine Wellpappe-Produktionslinie mit der Vorrichtung zur Pappespeicherung und -entfernung der vorliegenden Erfindung zeigt.
Fig. 7 bis 15 sind schematische Ansichten, die eine Spleißeinrichtung einer in den Fig. 1 bis 5 gezeigten Vorrichtung zur Pappespeicherung und -entfernung für eine Brücke in einer Wellpappe-Produktionslinie gemäß einer weiteren Ausführungsform und einen Spleißvorgang veranschaulichen.

### Ausführungsformen der vorliegenden Erfindung

### Ausführungsform 1:

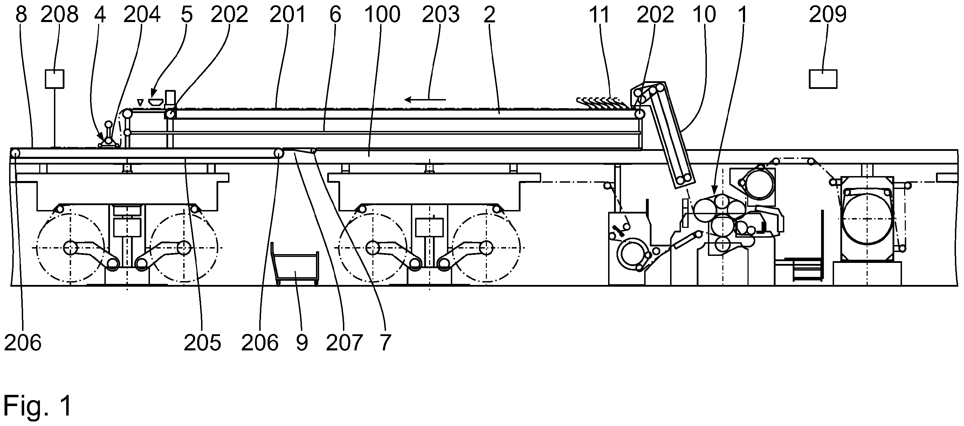

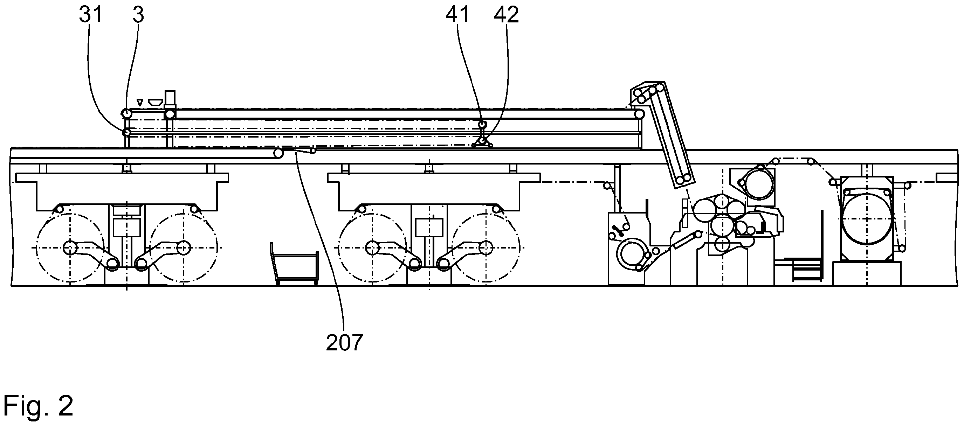

Bezug nehmend auf Fig. 1 und 2, umfasst die Vorrichtung zur Pappespeicherung und -entfernung für eine Brücke in der Wellpappe-Produktionslinie gemäß der vorliegenden Erfindung eine Brücke 100, die eine planare Fläche auf der Oberseite aufweist, wobei oberhalb derselben eine Fördereinrichtung 2 zur Förderung einer einseitig kaschierten Wellpappebahn angeordnet ist, die ein zu der planaren Fläche parallel verlaufendes Förderband zur Förderung der einseitig kaschierten Wellpappebahn umfasst.

Die Fördereinrichtung 2 zur Förderung der einseitig kaschierten Wellpappebahn weist ein Eingangsende und ein Ausgangsende auf, wobei das Ausgangsende mit einer Klemm- und Schneideinheit 5 ausgestattet ist.

Eine erste Pappe-Führungswalze 3 und eine zweite Pappe-Führungswalze 31 sind außerhalb bzw. stromabwärts des Ausgangsendes der Fördereinrichtung 2 zur Förderung der einseitig kaschierten Wellpappebahn angeordnet und sind mit einem vertikalen Abstand dazwischen zueinander nacheinander ausgerichtet bzw. angeordnet.

Eine Trennplatte 6 ist unterhalb der Fördereinrichtung 2 zur Förderung der einseitig kaschierten Wellpappebahn angeordnet und erstreckt sich parallel zu der Laufrichtung des Förderbands zur Förderung der einseitig kaschierten Wellpappebahn.

Eine bewegliche Pappespeicher-Wageneinheit 4 ist unterhalb der Fördereinrichtung 2 zur Förderung der einseitig kaschierten Wellpappebahn und auf der Brücke 100 angeordnet, um ein Gleitpaar mit der Brücke 100 zu bilden.

Die bewegliche Pappespeicher-Wageneinheit 4 steht mit einer Antriebseinrichtung in Verbindung und umfasst eine erste Pappe-Speicherwalze 41 und die zweite Pappe-Speicherwalze 42, die mit einem vertikalen Abstand dazwischen ausgerichtet bzw. angeordnet sind. Die erste Pappe-Führungswalze 3, die erste Pappe-Speicherwalze 41, die zweite Pappe-Führungswalze 31 und die zweite Pappe-Speicherwalze 42 sind längs der vertikalen Richtung mit einem vertikalen Abstand dazwischen aufeinanderfolgend angeordnet.

Eine Förderband-Einrichtung 8 ist in der Brücke 100 unter der beweglichen Pappespeicher-Wageneinheit 4 vorgesehen und eine zu einem Ende der Förderband-Einrichtung 8 benachbart angeordnete Öffnung ist außerdem in/an der Brücke 100 vorgesehen.

Eine Klappe 7 ist in der Öffnung vorgesehen und ein Ausschuss-Pappesammelwagen 9 ist unter der Klappe 7 vorgesehen.

Ferner weist die Förderband-Einrichtung 8 eine Vorwärts- und Rückwärts-Antriebseinrichtung auf.

Das Förderband 201 der Fördereinrichtung 2 ist umfangsseitig geschlossen und um zwei beabstandet zueinander angeordnete Umlenkwalzen 202 geführt. Es hat eine (Um)lauf- bzw. Förderrichtung 203, entlang welcher die einseitig kaschierte Wellpappebahn 11 in einer Horizontalen zu der Klemm- und Schneideinheit 5 gefördert wird.

Bezogen auf die Förderrichtung 203 der einseitig kaschierten Wellpappebahn 11 auf dem Förderband 201 ist stromabwärts zu der Fördereinrichtung 2 und beabstandet zu derselben die erste Pappe-Führungswalze 3 angeordnet. Die Achsen der ersten Pappe-Führungswalze 3 und der Umlenkwalzen 202 liegen vorzugsweise im Wesentlichen in einer gemeinsamen Ebene, die günstigerweise horizontal verläuft.

Unterhalb der ersten Pappe-Führungswalze 3 und beabstandet zu dieser ist die zweite Pappe-Führungswalze 31 angeordnet. Die Pappe-Führungswalzen 3, 31 bzw. deren Achsen liegen in einer vertikalen Ebene.

Die Trennplatte 6 erstreckt sich unterhalb der Fördereinrichtung 2 horizontal. Sie erstreckt sich von der eingangsseitigen Umlenkwalze 202 bis zu der zweiten Pappe-Führungswalze 31. Die Trennplatte 6 und die zweite Pappe-Führungswalze 31 liegen im Wesentlichen in einer gemeinsamen, horizontalen Ebene. Die Trennplatte 6 hat günstigerweise eine Breite, die mindestens der Breite der einseitig kaschierten Wellpappebahn 11 in deren Querrichtung entspricht.

Die Pappespeicher-Wageneinheit 4 ist horizontal verlagerbar. Dazu dient die Antriebseinrichtung 204, die beispielsweise einen in die Pappespeicher-Wageneinheit 4 integrierten Antrieb oder einen externen Antrieb hat, der vorzugsweise mit der Pappespeicher-Wageneinheit 4 über ein Antriebsmittel, wie ein/e Seil, Band, Gestänge, Kette oder dergleichen, in direkter oder indirekter Verbindung steht. Die Pappespeicher-Wageneinheit 4 ist günstigerweise geführt.

Die erste Pappe-Speicherwalze 41 der Pappespeicher-Wageneinheit 4 ist oberhalb einer die Trennplatte 6 einschließenden Ebene angeordnet, während die zweite Pappe-Speicherwalze 42 der Pappespeicher-Wageneinheit 4 unterhalb dieser Ebene angeordnet ist. Die Pappe-Speicherwalzen 41, 42 bzw. deren Achsen liegen in einer vertikalen Ebene.

Die Förderband-Einrichtung 8 ist unterhalb der Pappespeicher-Wageneinheit 4 angeordnet. Das Förderband 205 der Förderband-Einrichtung 8 ist endlos. Es ist um Umlenkwalzen 206 geführt und erstreckt sich seitlich über eine vertikale Ebene hinaus, die die Pappe-Führungswalzen 3, 31 einschließt. Das Förderband 205 erstreckt sich beidseits seitlich über eine Spleißvorrichtung hinaus, die nachfolgend noch näher beschrieben wird.

Die Achsen der Umlenkwalzen 202, 206, der Pappe-Führungswalzen 3, 31 und der Pappe-Speicherwalzen 41, 42 verlaufen jeweils horizontal und parallel zueinander.

Die in der Brücke 100 ausgebildete Öffnung 207 befindet sich seitlich neben der Förderband-Einrichtung 8. Es befindet sich außerdem unterhalb des Verfahrwegs der Pappespeicher-Wageneinheit 4. In/an der Brücke 100 ist die Klappe 7 schwenkbar gelagert. Die Klappe 7 ist um eine horizontale Schwenkachse verlagerbar, die parallel zu den Umlenkwalzen 206 verläuft. Die Klappe 7 ist an die Öffnung 207 angepasst. In ihrer Schließstellung erstreckt sich die Klappe 7 horizontal und verschließt die Öffnung 207. In ihrer Öffnungsstellung ist die Klappe 7 aus der Horizontalen ausgelenkt und gibt die Öffnung 207 frei.

Die Vorwärts- und Rückwärts-Antriebseinrichtung 208 ist im Stande, das Förderband 205 entweder vorwärts oder gegensinnig rückwärts anzutreiben. Die Vorwärts- und Rückwärts-Antriebseinrichtung 208 steht dazu mit der Förderband-Einrichtung 8 in Verbindung.

Die Vorrichtung zur Pappespeicherung und -entfernung hat die Steuereinrichtung 209.

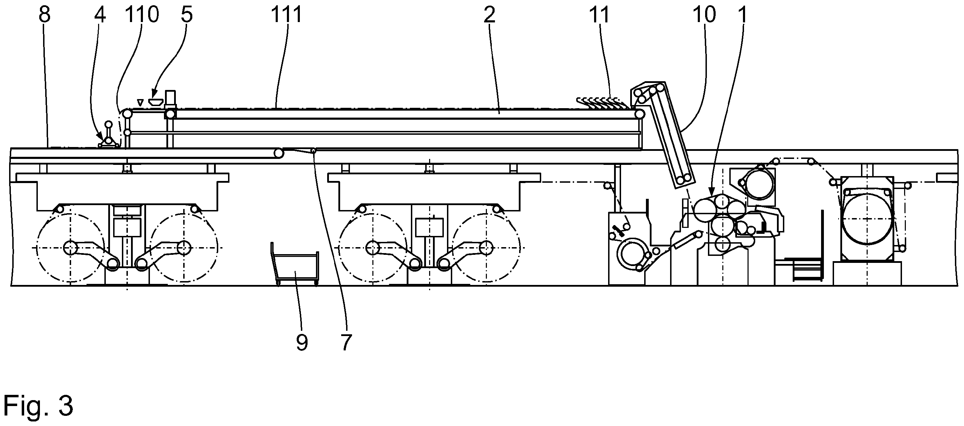

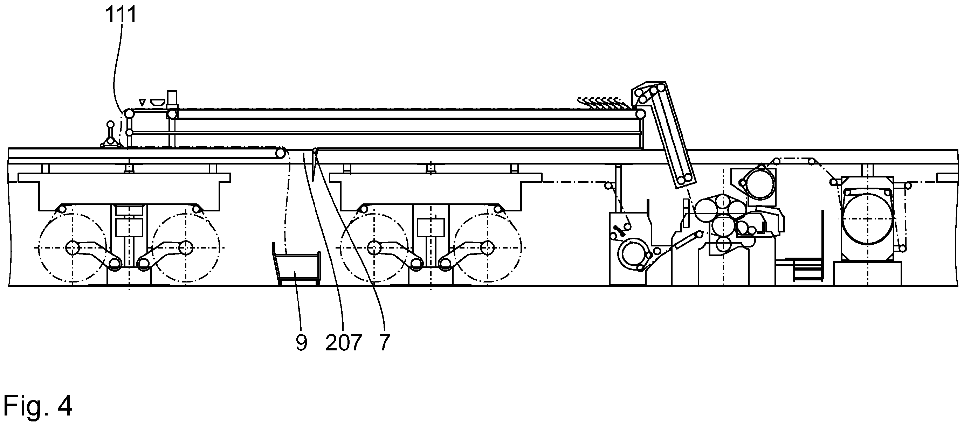

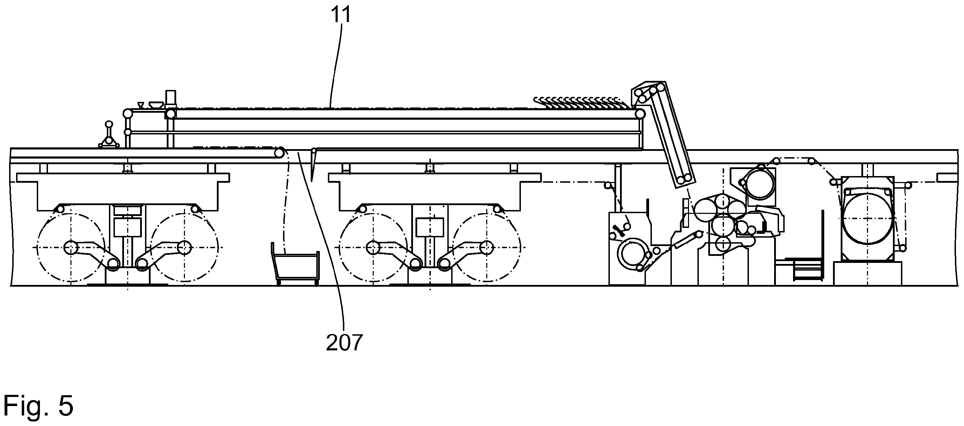

Wie in Fig. 3, 4 und 5 gezeigt ist, ist das Funktionsprinzip der vorliegenden Ausführungsform wie folgt: das Eingangsende der Fördereinrichtung 2 zur Förderung der einseitig kaschierten Wellpappebahn ist benachbart zu dem Ausgang der Produktionsmaschine 1 zur Herstellung der einseitig kaschierten Wellpappebahn angeordnet, die die einseitig kaschierte Wellpappebahn ausgibt;
die von der Produktionsmaschine 1 zur Herstellung der einseitig kaschierten Wellpappebahn ausgegebene, einseitig kaschierte Wellpappebahn 11 wird zu dem Förderband zur Förderung der einseitig kaschierten Wellpappebahn durch ein geneigtes Führungs-Gestellmittel 10 gefördert und die einseitig kaschierte Wellpappebahn 11 wird durch das Förderband zur Förderung der einseitig kaschierten Wellpappebahn zu dem Ausgangsende der Fördereinrichtung 2 zur Förderung der einseitig kaschierten Wellpappebahn transportiert und weiter in die Förderband-Einrichtung 8 gefördert, nachdem sie durch die Klemm- und Schneideinheit 5 gelaufen ist. Das geneigte Führungs-Gestellmittel 10 ist als Hochtransport ausgeführt.

Die bewegliche Pappespeicher-Wageneinheit 4 bewegt sich horizontal von dem Ausgangsende zu dem Eingangsende der Fördereinrichtung 2 zur Förderung der einseitig kaschierten Wellpappebahn und die erste Pappe-Speicherwalze 41 und die zweite Pappe-Speicherwalze 42 in der beweglichen Pappespeicher-Wageneinheit 4 führen der Reihe nach die einseitig kaschierte Wellpappebahn 11 um die erste Pappe-Führungswalze 3, die erste Pappe-Speicherwalze 41, die zweite Pappe-Führungswalze 31 und die zweite Pappe-Speicherwalze 42, um die Pappespeicherung zu realisieren. Dieser Vorgang ist in Fig. 1, 2 gezeigt. Durch Verfahren der Pappespeicher-Wageneinheit 4 durch die zugehörige Antriebseinrichtung 204 in Richtung auf das Führungs-Gestellmittel 10 bzw. das Eingangsende der Fördereinrichtung 2 erhöht sich allmählich die Länge der gespeicherten, einseitig kaschierten Wellpappebahn 11. Dies ist darauf zurückzuführen, dass die einseitig kaschierte Wellpappebahn 11 nun auch um die Pappe-Speicherwalzen 41, 42 der Pappespeicher-Wageneinheit 4 geführt wird, die sich von den Pappe-Führungswalzen 3, 31 entfernt und dabei die einseitig kaschierte Wellpappebahn 11 speichernd mitnimmt. Die einseitig kaschierte Wellpappebahn 11 verläuft so in der Vorrichtung zur Pappespeicherung und -entfernung mehrfach hin und her bzw. mäanderförmig, was zu einer erhöhten Länge der einseitig kaschierten Wellpappebahn 11 in der Vorrichtung zur Pappespeicherung und -entfernung führt.

Wenn die bewegliche Pappespeicher-Wageneinheit 4 die Grenze ihres Wegs erreicht, wird die Länge der gespeicherten einseitig kaschierten Wellpappebahn 11 das Maximum erreichen. Verglichen mit Fig. 2 ist die bewegliche Pappespeicher-Wageneinheit 4 dann noch weiter zu dem Führungs-Gestellmittel 10 bewegt. Die Pappespeicher-Wageneinheit 4 ist dann benachbart zu dem Fürhungs-Gestellmittel 10 angeordnet.

Die einseitig kaschierte Wellpappebahn 11 hat dann in der Vorrichtung zur Pappespeicherung und -entfernung parallel zueinander verlaufende Abschnitte, die in Förderrichtung der einseitig kaschierten Wellpappebahn 11 beabstandet zueinander bzw. hintereinander angeordnet sind. Die Trennplatte 6 befindet sich dabei zwischen zwei Abschnitten der einseitig kaschierten Wellpappebahn 11, bei welchen deren Wellbahnen einander zugewandt sind bzw. deren Deckbahnen/Kaschierbahnen einander abgewandt sind. Wegen der Trennplatte 6 sind die Wellenspitzen der einseitig kaschierten Wellpappebahn 11 vor Beschädigung geschützt und die einseitig kaschierte Wellpappebahn 11 wird sogar nicht beschädigt, falls die Produktionsmaschine 1 zur Herstellung der einseitig kaschierten Wellpappebahn erneut gestartet wird. Insbesondere verhindert so die Trennplatte 6, dass sich Wellenspitzen des einen Abschnitts der einseitig kaschierten Wellpappebahn 11 in entsprechende Wellentäler des benachbarten Abschnitts der einseitig kaschierten Wellpappebahn 11 legen, was zu einer Beschädigung der einseitig kaschierten Wellpappebahn 11 bzw. zu einer Produktionsstörung führen kann.

Wenn sich die Pappespeicher-Wageneinheit 4 wieder zurückbewegt in Richtung auf das Ausgangsende der Fördereinrichtung 2, wird dabei die Länge der in der Vorrichtung zur Pappespeicherung und -entfernung gespeicherten Wellpappebahn 11 wieder reduziert, bis diese ihr Minimum erreicht, wenn die Pappespeicher-Wageneinheit 4 die einseitig kaschierte Wellpappebahn 11 nicht länger umlenkt.

Falls das Detektionsmittel einen Spleißfehler oder andere fehlerhafte Stücke erkennt, wird die Klemm- und Schneideinheit 5 gestartet, um einen Weitertransport der einseitig kaschierten Wellpappebahn 11 zu verhindern. Die Klemm- und Schneideinheit 5 stoppt dann somit die einseitig kaschierte Wellpappebahn 11. Dies erfolgt durch klemmende Festlegung der einseitig kaschierten Wellpappebahn 11 an der Klemm- und Schneideinheit 5. In der Zwischenzeit steuert die Steuereinrichtung 209 die bewegliche Pappespeicher-Wageneinheit 4, um zu dem Ausgangsende der Fördereinrichtung 2 zur Förderung der einseitig kaschierten Wellpappebahn zurückzukehren und die einseitig kaschierte Wellpappebahn 11 wird durch die Klemm- und Schneideinheit 5 in zwei Stücke 110 und 111 geschnitten. Dabei wird die Länge der in der Vorrichtung zur Pappespeicherung und -entfernung gespeicherten einseitig kaschierten Wellpappebahn 11 wieder reduziert, bis diese ihr Minimum erreicht, wenn die Pappe-Speicherwalzen 41, 42 nicht länger die einseitig kaschierte Wellpappebahn 11 umlenken.

Anschließend wird die Geschwindigkeit der Fördereinrichtung 2 durch die Steuereinrichtung 209 reduziert. Sie wird auf etwa 5 % bis 20 % der Produktionsgeschwindigkeit der Produktionsmaschine 1 zur Herstellung der einseitig kaschierten Wellpappebahn reduziert.

Wegen dem Geschwindigkeitsunterschied zwischen dem Förderband zur Förderung der einseitig kaschierten Wellpappebahn und der Produktionsmaschine 1 zur Herstellung der einseitig kaschierten Wellpappebahn wird das fehlerhafte Stück 111 der einseitig kaschierten Wellpappebahn 11, das noch nicht durch die Klemm- und Schneideinheit 5 gelaufen ist, auf dem Förderband zur Förderung der einseitig kaschierten Wellpappebahn gelassen und bildet eine Schleifenform aus, wobei eine Speicherung des fehlerhaften Stücks 111 erfolgt; während das taugliche Stück 110, das bereits durch die Klemm- und Schneideinheit 5 gelaufen ist, durch die bewegliche Pappespeicher-Wageneinheit 4 läuft und von der Förderband-Einrichtung 8 weitergefördert wird.

Das taugliche Stück 110 wird über die Förderband-Einrichtung 8 gefördert bis sein Ende die Pappespeicher-Wageneinheit 4 erreicht, auf dieser gesichert und von der Förderband-Einrichtung 8 abgehoben wird.

Dann ändert die Steuereinrichtung die Förderrichtung der Förderband-Einrichtung 8 und gibt gleichzeitig die Klemm- und Schneideinheit 5 frei. Das fehlerhafte Stück 111 der einseitig kaschierten Wellpappebahn, das auf dem Förderband zur Förderung der einseitig kaschierten Wellpappebahn gelassen worden ist, bewegt sich vorwärts mit dem Förderband zur Förderung der einseitig kaschierten Wellpappebahn.

Wegen dem Wechsel in der Förderrichtung der Förderband-Einrichtung 8 wird das fehlerhafte Stück 111 der einseitig kaschierten Wellpappebahn zur Position der Klappe 7 gefördert und durch die Öffnung nach unten zu dem Ausschuss-Pappesammelwagen 9 transportiert. Dabei befindet sich die Klappe 7 in ihrer Öffnungsstellung, sodass das fehlerhafte Stück 111 im Stande ist, die Öffnung 207 zu durchsetzen,

Nachdem das gesamte fehlerhafte Stück 111 der einseitig kaschierten Wellpappebahn durch die Klemm- und Schneideinheit 5 gegangen ist, startet die Steuereinrichtung die Klemm- und Schneideinheit 5 erneut, um die einseitig kaschierte Wellpappebahn 11 abzuschneiden, und nachdem das fehlerhafte Stück 111 in den Ausschuss-Pappesammelwagen 9 abgeführt worden ist, ändert die Steuereinrichtung letztendlich die Förderrichtung der Förderband-Einrichtung 8 erneut und die taugliche, einseitig kaschierte Wellpappebahn 11 wird von der Produktionsmaschine 1 zur Herstellung der einseitig kaschierten Wellpappebahn von der Klemm- und Schneideinheit 5 freigegeben, durch die bewegliche Pappespeicher-Wageneinheit 4 gefördert und dann mit der früheren tauglichen, einseitig kaschierten Wellpappebahn 10 verbunden, und dann setzt die bewegliche Pappespeicher-Wageneinheit 4 fort, die Pappespeicherfunktion durchzuführen.

Bevor die einseitig kaschierte Wellpappebahn 11 durch die Klemm- und Schneideinheit 5 abgeschnitten wird, wird die einseitig kaschierte Wellpappebahn 11 von der Klemm- und Schneideinheit 5 klemmend festgelegt. Durch das Abschneiden der einseitig kaschierten Wellpappebahn 11 wird das fehlerhafte Stück 111 aus der einseitig kaschierten Wellpappebahn 11 herausgeschnitten.

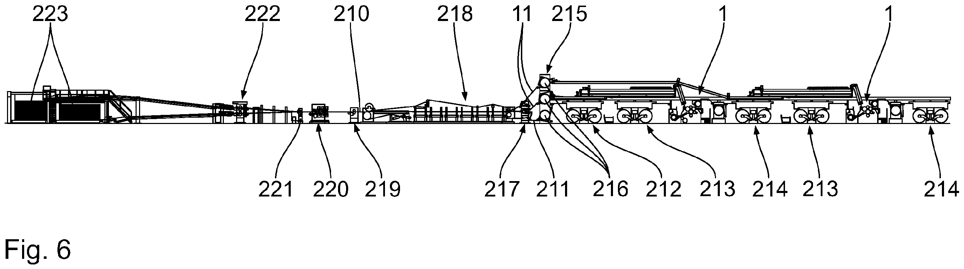

Nachfolgend bezugnehmend auch auf Fig. 6 wird die die Vorrichtung zur Pappespeicherung und -entfernung einschließende Wellpappe-Produktionslinie beschrieben. Die in Fig. 6 veranschaulichte Wellpappe-Produktionslinie dient zur Erzeugung einer fünflagigen Wellpappe 210 mit zwei einseitig kaschierten Wellpappebahnen 11 und einer einlagigen Kaschierbahn 211.

Zur Herstellung der Kaschierbahn 211 hat die Wellpappe-Produktionslinie eine erste Spleißvorrichtung 212. Die Wellpappe-Produktionslinie hat zur Herstellung der beiden einseitig kaschierten Wellpappebahnen 11 zwei der Produktionsmaschinen 1 zur Herstellung der einseitig kaschierten Wellpappebahn.

Die erste Spleißvorrichtung 212 hat zum Abrollen einer endlichen ersten Materialbahn von einer ersten Materialrolle eine erste Abrolleinheit und zum Abrollen einer endlichen zweiten Materialbahn von einer zweiten Materialrolle eine zweite Abrolleinheit. Die endliche erste und zweite Materialbahn werden zum Bereitstellen der endlosen Kaschierbahn 211 mittels einer nicht dargestellten Verbinde- und Schneideeinheit der ersten Spleißvorrichtung 212 miteinander verbunden.

Jeder Produktionsmaschine 1 ist eine zweite Spleißvorrichtung 213 und eine dritte Spleißvorrichtung 214 vorgeordnet. Jede zweite Spleißvorrichtung 213 hat zum Abrollen einer endlichen dritten Materialbahn von einer dritten Materialrolle eine dritte Abrolleinheit und zum Abrollen einer endlichen vierten Materialbahn von einer vierten Materialrolle eine vierte Abrolleinheit. Die endliche dritte und vierte Materialbahn werden zum Bereitstellen einer endlosen ersten Materialbahn mittels einer nicht dargestellten Verbinde- und Schneideeinheit der zweiten Spleißvorrichtung 213 jeweils miteinander verbunden.

Jede dritte Spleißvorrichtung 214 hat zum Abrollen einer endlichen fünften Materialbahn von einer fünften Materialrolle eine fünfte Abrolleinheit und zum Abrollen einer endlichen sechsten Materialbahn von einer sechsten Materialrolle eine sechste Abrolleinheit. Die endliche fünfte und sechste Materialbahn werden zum Bereitstellen einer endlosen zweiten Materialbahn mittels einer nicht dargestellten Verbinde- und Schneideeinheit der jeweiligen dritten Spleißvorrichtung 214 miteinander verbunden.

Jeder Produktionsmaschine 1 zur Herstellung einer einseitig kaschierten Wellpappebahn 11 wird eine endlose erste Materialbahn und eine endlose zweite Materialbahn zugeführt.

Jede Produktionsmaschine 1 zur Herstellung einer einseitig kaschierten Wellpappebahn 11 umfasst zum Erzeugen einer eine Wellung aufweisenden Wellbahn aus der endlosen ersten Materialbahn eine Riffelwalzenanordnung mit drehbar gelagerten Riffelwalzen. Die Riffelwalzen bilden zum Durchführen und Riffeln der endlosen ersten Materialbahn einen Walzenspalt aus.

Zum leimenden Verbinden der Wellbahn mit der jeweiligen endlosen zweiten Materialbahn zu der einseitig kaschierten Wellpappebahn 11 weist jede Produktionsmaschine 1 zur Herstellung der einseitig kaschierten Wellpappebahn ein Leimwerk auf, das wiederum eine Leimdosierwalze, einen Leimbehälter und eine Leimauftragswalze umfasst. Zum Durchführen und Beleimen der Wellbahn bildet die Leimauftragswalze mit der unteren Riffelwalze einen Beleimungsspalt aus, wobei die Leimauftragswalze Leim aus dem Leimbehälter auf Spitzen der Wellung der Wellbahn aufträgt. Die endlose zweite Materialbahn wird anschließend mit der entsprechenden, mit Leim versehenen Wellbahn in der Produktionsmaschine 1 zur Herstellung der einseitig kaschierten Wellpappebahn 11 zu der einseitig kaschierten Wellpappebahn 11 zusammengefügt.

Zum Anpressen der endlosen zweiten Materialbahn gegen die mit Leim versehene Wellbahn hat jede Produktionsmaschine 1 zur Herstellung der einseitig kaschierten Wellpappebahn 11 eine Anpresseinrichtung. Die Anpresseinrichtung ist günstigerweise als Anpressbandmodul ausgeführt. Sie drückt gegen die endlose zweite Materialbahn, die wiederum gegen die mit Leim versehene, an der oberen Riffelwalze anliegende Wellbahn gepresst wird.

Zum Zwischenspeichern und Puffern der einseitig kaschierten Wellpappebahnen 11 werden diese über das jeweilige Führungs-Gestellmittel 10 der entsprechenden Vorrichtung zur Pappespeicherung und -entfernung zugeführt.

Stromabwärts zu den Vorrichtungen zur Pappespeicherung und -entfernung befindet sich eine Vorheizvorrichtung 215 der Wellpappe-Produktionslinie, die drei übereinander angeordnete Heizwalzen 216 umfasst. Der Vorheizvorrichtung 215 werden die einseitig kaschierten Wellpappebahnen 11 und die Kaschierbahn 211 zugeführt und umschlingen teilweise die jeweilige Heizwalze 216.

Stromabwärts zu der Vorheizvorrichtung 215 hat die Wellpappe-Produktionslinie eine Beleimungsvorrichtung 217 mit zwei übereinander angeordneten Beleimungswalzen, die teilweise in ein jeweiliges Leimbad eingetaucht sind. Die einseitig kaschierten Wellpappebahnen 11 befinden sich in Kontakt mit der jeweiligen Beleimungswalze und werden mit Leim versehen.

Stromabwärts zu der Beleimungsvorrichtung 217 hat die Wellpappe-Produktionslinie eine Heiz-Andrückvorrichtung 218, in der die mit Leim versehenen, einseitig kaschierten Wellpappebahnen 11 und die Kaschierbahn 211 erwärmt und aneinandergedrückt werden. Dazu hat die Heiz-Andrückvorrichtung 218 einen horizontalen, mit Heizelementen versehenen Tisch, der sich in einer dort vorliegenden Transportrichtung der einseitig kaschierten Wellpappebahnen 11 und der Kaschierbahn 211 erstreckt. Oberhalb des Tisches hat die Heiz-Andrückvorrichtung 218 einen endlosen, geführten Andrückgurt. Zwischen dem Andrückgurt und dem Tisch ist ein Andrückspalt gebildet, durch den die einseitig kaschierten Wellpappebahnen 11 und die Kaschierbahn 211 übereinander transportiert und dort aneinandergedrückt werden. In der Heiz-Andrückvorrichtung 218 wird die mehrlagige Wellpappe 210 gebildet.

Stromabwärts zur Heiz-Andrückvorrichtung 218 hat die Wellpappe-Produktionslinie eine Querschneidevorrichtung 219, die beispielsweise zum Ausschleusen von Spleißstellen aus der Wellpappe 210 dient. Die Querschneidevorrichtung 219 hat dazu eine Messerbalkenwalze mit einem Messer und eine Schneidauflage, die der Messerbalkenwalze zugeordnet ist.

Stromabwärts zu der Querschneidevorrichtung 219 hat die Wellpappe-Produktionslinie eine Längs-Schneide-/Rill-Vorrichtung 220, die zwei hintereinander angeordnete Rillstationen sowie zwei hintereinander angeordnete Längsschneidestationen umfasst. Durch die Längsschneidestationen ist die endlose Wellpappe 210 in endlose Längs-Wellpappestücke teilbar.

Stromabwärts zu der Längs-Schneide-/Rill-Vorrichtung 220 hat die Wellpappe-Produktionslinie eine Weiche 221, die zum Antransportieren der endlosen Wellpappestücke einen Zuführtisch und zum Abtransportieren derselben in mehreren Ebenen eine Abführtischeinheit mit mehreren Abführtischen umfasst.

Stromabwärts zu der Weiche 221 ist eine zweite Querschneidevorrichtung 222 vorgesehen, die zwei übereinander angeordnete Teil-Querschneideinrichtungen aufweist. Jede Teil-Querschneideeinrichtung ist im Stande, das jeweilige endlose Wellpappe stück quer zu durchtrennen und so Wellpappebögen zu erzeugen.

Stromabwärts zu jeder Teil-Querschneideeinrichtung ist eine Stapelablagevorrichtung 223 zum Stapeln der Wellpappebögen angeordnet.

### Ausführungsform 2:

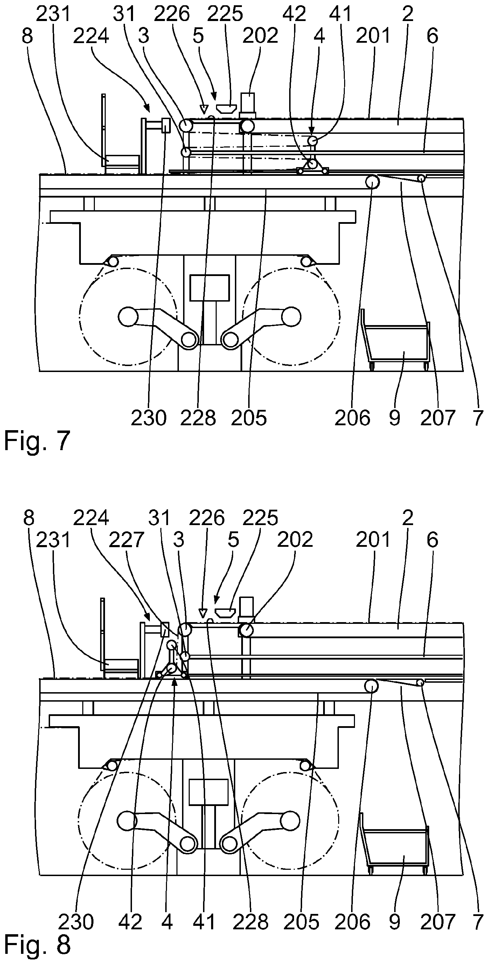

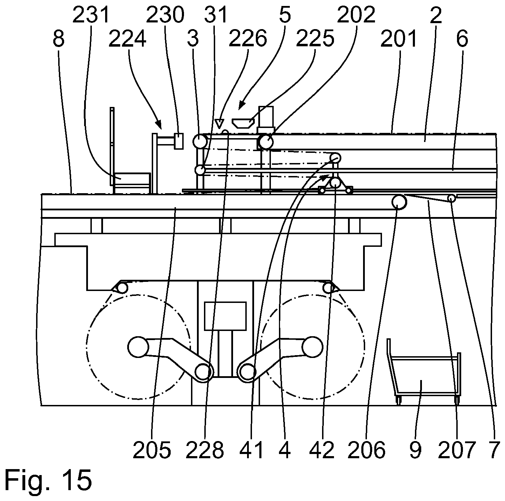

Nachfolgend bezugnehmend auf die Fig. 7 bis 15 wird eine Vorrichtung zur Pappespeicherung und -entfernung für eine Brücke 100 in einer Wellpappe-Produktionslinie beschrieben, die auf der bereits beschriebenen Vorrichtung zur Pappespeicherung und -entfernung für eine Brücke 100 in einer Wellpappe-Produktionslinie basiert. Auf die vorherige Beschreibung wird verwiesen.

Verglichen mit der vorherigen Vorrichtung weist die Vorrichtung zur Pappespeicherung und -entfernung für eine Brücke 100 in einer Wellpappe-Produktionslinie gemäß Fig. 7 bis 15 zusätzlich eine Spleißeinrichtung 224 auf, die insbesondere ein (halb)automatisches Spleißen tauglicher einseitig kaschierter Wellpappebahnen aneinander erlaubt.

Die Spleißeinrichtung 224 ist günstigerweise als Hand-Spleißeinrichtung ausgeführt. Sie ist der ersten Pappe-Führungswalze 3 zugeordnet. Die Spleißeinrichtung 224 ist teleskopierbar, schwenkbar und/oder klappbar. Sie ist ein- bzw. ausfahrbar und hat dazu ein entsprechend verlagerbares Spleißteil 230.

Die Klemm- und Schneideinheit 5 umfasst ein Klemmteil 225 und ein Schneidteil 226, das dem Klemmteil 225 nachgeordnet ist. Das Klemmteil 225 ist beispielsweise als Klemmblock ausgeführt. Es ist zwischen einer Klemmstellung und einer Freigabestellung bzw. inaktiven Stellung gegenüber der einseitig kaschierten Wellpappebahn verlagerbar. Das Schneidteil 226 ist beispielsweise als Messer, Klinge oder dergleichen ausgeführt. Es ist zwischen einer Schneidstellung und einer inaktiven Stellung gegenüber der einseitig kaschierten Wellpappebahn verlagerbar.

Ausgehend von Fig. 7, befindet sich die Klappe 7 in ihrer Schließstellung, sodass die Öffnung 207 geschlossen ist.

Die Klemm- und Schneideinheit 5, das heißt sowohl das Klemmteil 225 als auch das Schneidteil 226, befindet sich in ihrer inaktiven Stellung.

Die Spleißeinrichtung 224 befindet sich ebenfalls in ihrer inaktiven Stellung. Das Spleißteil 230 ist beabstandet zu der ersten Pappe-Führungswalze 3.

Die Fördereinrichtung und die Förderband-Einrichtung 8 sind in Betrieb und fördern die einseitig kaschierte Wellpappebahn.

Die Pappespeicher-Wageneinheit 4 befindet sich in einer Speicherposition, sodass die Vorrichtung zur Pappespeicherung und -entfernung für eine Brücke 100 in einer Wellpappe-Produktionslinie gerade eine einseitig kaschierte Wellpappebahn 11 gespeichert hat. Die einseitig kaschierte Wellpappebahn läuft so um die erste Pappe-Führungswalze 3, die erste Pappe-Speicherwalze 41, die zweite Pappe-Führungswalze 31 und die zweite Pappe-Speicherwalze 42.

Falls ein Detektionsmittel einen Spleißfehler oder andere fehlerhafte Stücke erkennt, wird, wie Fig. 8 zeigt, als nächstes die Pappespeicher-Wageneinheit 4 aus ihrer Speicherposition in ihre Nicht-Speicherposition verfahren, wodurch quasi die Pappespeicherung bzw. der Vorrat an der einseitig kaschierten Wellpappebahn aufgelöst wird. Dies wird durch die Steuereinrichtung veranlasst. Die einseitig kaschierte Wellpappebahn läuft so um die erste Pappe-Führungswalze 3 und die zweite Pappe-Speicherwalze 42.

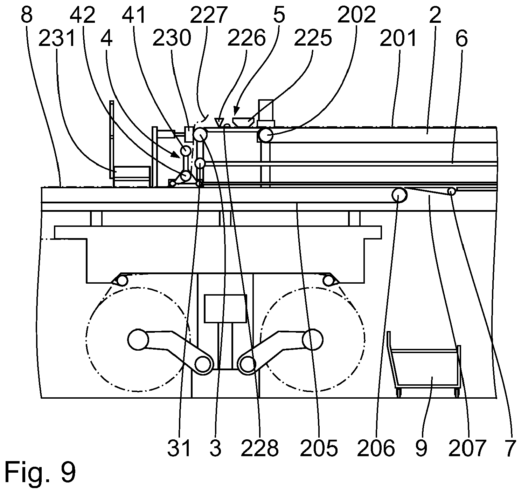

In Fig. 9 ist die Förderband-Einrichtung 8 gestoppt.

Die Klemm- und Schneideinheit 5 befindet sich nun in ihrer aktiven Position. Das Klemmteil 225 drückt klemmend gegen die einseitig kaschierte Wellpappebahn, während das Schneidteil 226 die einseitig kaschierte Wellpappebahn in einer Querrichtung in ein vorauseilendes Stück 227 und ein nacheilendes Stück 228 durchtrennt. Das nacheilende Stück 228 ist durch das Klemmteil 225 klemmend örtlich festgelegt. Das vorauseilende Stück 227 ist durch die Spleißeinrichtung 224 örtlich festgelegt, deren Spleißteil 230 in seine Klemmstellung ausgefahren ist. Insbesondere ist das vorauseilende Stück 227 ein taugliches Stück, während das nacheilende Stück 228 ein fehlerhaftes Stück ist.

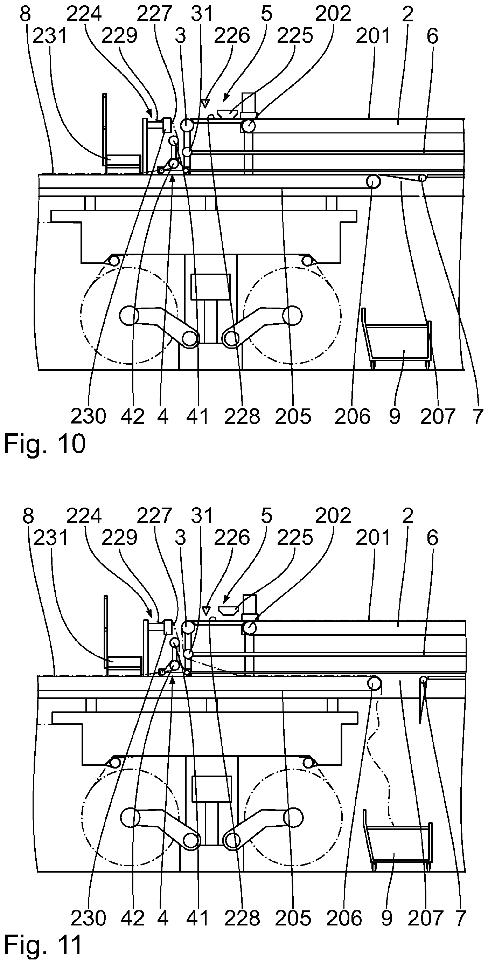

Wie Fig. 10 zeigt, wird anschließend das Schneidteil 226 in seine inaktive Stellung verlagert, während das Klemmteil 225 in seiner Klemmstellung bleibt.

Das Spleißteil 230 wird wieder in seine inaktive Stellung verlagert, sodass quasi dort die einseitig kaschierte Wellpappebahn bzw. das erzeugte vorauseilende Stück 227 freigegeben wird. Auf das erzeugte vorauseilende Stück 227 wird an dessen stromabwärtigem Ende 229 ein Klebeband (nicht dargestellt) angebracht. Das Klebeband kann maschinell oder händisch aufgebracht werden.

Wie Fig. 11 zeigt, wird als nächstes die Klappe 7 in ihre Öffnungsstellung verschwenkt, sodass die Öffnung 207 freigegeben wird.

Das Klemmteil 225 wird in seine inaktive Stellung gebracht, sodass das nacheilende Stück 228 wieder freigegeben wird.

Die Förderband-Einrichtung 8 wird so in Betrieb gesetzt, dass das nacheilende Stück 228 über die Förderband-Einrichtung 8 zu der Öffnung 207 gefördert wird und so ausgeschleust wird.

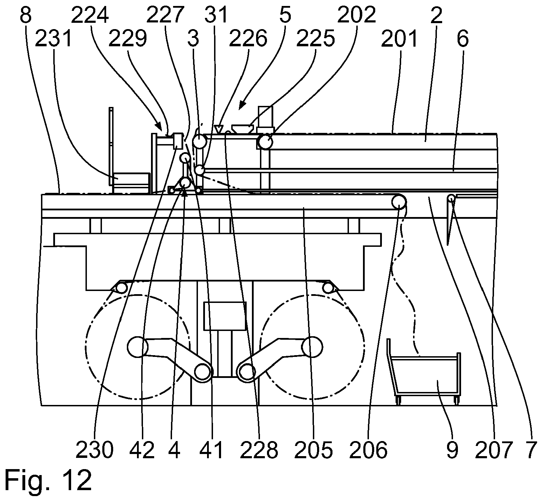

Wie Fig. 12 zeigt, werden das Klemmteil 225 und das Schneidteil 226 wieder in ihre aktive Stellung gebracht, sodass das nacheilende Stück 228 beklemmt und separiert wird. Dies geschieht, wenn die einseitig kaschierte Wellpappebahn wieder fehlerfrei ist. Das nacheilende Stück wird über die Öffnung 207 ausgeschleust und in den Ausschuss-Pappesammelwagen 9 geführt.

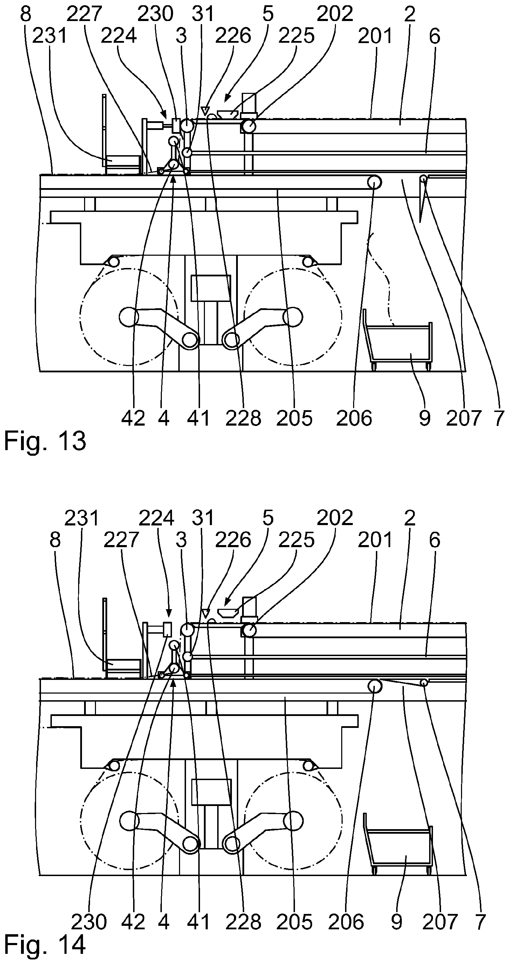

Wie Fig. 13 zeigt, wird anschließend das Schneidteil 226 wieder in seine inaktive Stellung gebracht. Die Spleißeinrichtung 224 wird wieder aktiviert, sodass das Spleißteil 230 in eine Spleißstellung (aus)fährt und die einseitig kaschierte Wellpappebahn gegen die erste Pappe-Führungswalze 3 klemmend drückt. Über das angebrachte Klebeband wird das vorauseilende Stück 227 mit der einseitig kaschierten fehlerfreien Wellpappebahn fest verbunden. So wird wieder eine endlose einseitig kaschierte fehlerfreie Wellpappebahn geschaffen.

Wie Fig. 14 zeigt, wird anschließend die Klappe 7 in ihre Schließstellung geschwenkt, sodass die Öffnung 207 wieder verschlossen wird. Das Spleißteil 230 wird wieder in seine inaktive Stellung gebracht. Ferner wird das Klemmteil 225 in seine inaktive Stellung gebracht. Die Förderband-Einrichtung 8 wird wieder so in Betrieb gesetzt, dass die einseitig kaschierte Wellpappebahn weg von der Klappe 7 transportiert wird.

Anschließend wird die Pappespeicher-Wageneinheit 4 wieder in eine Speicherstellung gefahren, sodass ein Vorrat an einseitig kaschierter Wellpappebahn 11 erzeugt wird.

Die erwähnten Ausschleus- bzw. Spleißschritte werden insbesondere durch die Steuereinrichtung herbeigeführt.

Benachbart zu der Spleißeinrichtung 224 erstreckt sich bzw. endet ein Laufsteg 231, sodass ein Arbeiter die Spleißeinrichtung 224 gut erreichen kann und dort beispielsweise erforderliche manuelle Schritte durchführen kann.

## Patentansprüche

1. Vorrichtung zur Pappespeicherung und -entfernung für eine Brücke (100) in einer Wellpappe-Produktionslinie, umfassend eine Brücke (100) mit einer planaren Fläche auf der Oberseite, wobei
a) oberhalb der Brücke (100) eine Fördereinrichtung (2) zur Förderung einer einseitig kaschierten Wellpappebahn (11) angeordnet ist, die ein parallel zu der planaren Fläche verlaufendes Förderband zur Förderung der einseitig kaschierten Wellpappebahn (11) umfasst und ein Eingangsende und ein Ausgangsende aufweist, wo eine Klemm- und Schneideinheit (5) vorgesehen ist,
b) eine erste Pappe-Führungswalze (3) und eine zweite Pappe-Führungswalze (31), die mit einem vertikalen Abstand dazwischen angeordnet sind, außerhalb des Ausgangsendes der Fördereinrichtung (2) zur Förderung der einseitig kaschierten Wellpappebahn (11) vorgesehen sind,
c) eine Trennplatte (6), die parallel zu der Laufrichtung des Förderbands zur Förderung der einseitig kaschierten Wellpappebahn (11) verläuft, unterhalb der Fördereinrichtung (2) zur Förderung der einseitig kaschierten Wellpappebahn (11) vorgesehen ist,
d) eine bewegliche Pappespeicher-Wageneinheit (4) auf der Brücke (100) unterhalb der Fördereinrichtung (2) zur Förderung der einseitig kaschierten Wellpappebahn (11) unter Bildung eines Gleitpaars mit der Brücke (100) vorgesehen ist, und
e) eine Antriebseinrichtung mit der beweglichen Pappespeicher-Wageneinheit (4) in Verbindung steht, die eine erste Pappe-Speicherwalze (41) und eine zweite Pappe-Speicherwalze (42) umfasst, die mit einem vertikalen Abstand dazwischen angeordnet sind,
f) die erste Pappe-Führungswalze (3), die erste Pappe-Speicherwalze (41), die zweite Pappe-Führungswalze (31) und die zweite Pappe-Speicherwalze (42) längs der vertikalen Richtung mit einem vertikalen Abstand dazwischen aufeinanderfolgend angeordnet sind,
g) eine Förderband-Einrichtung (8) in der Brücke (100) unter der beweglichen Pappepeicher-Wageneinheit (4) vorgesehen ist,
h) eine Öffnung in der Brücke (100) benachbart zu einem Ende der Förderband-Einrichtung (8) vorgesehen ist, und
i) eine Klappe (7), unterhalb welcher ein Ausschuss-Pappesammelwagen (9) vorgesehen ist, in der Öffnung vorgesehen ist.

2. Vorrichtung zur Pappespeicherung und -entfernung für eine Brücke in der Wellpappe-Produktionslinie gemäß Anspruch 1, **dadurch gekennzeichnet, dass** die Förderband-Einrichtung (8) eine Vorwärts- und Rückwärts-Antriebseinrichtung umfasst.

3. Vorrichtung zur Pappespeicherung und -entfernung für eine Brücke in der Wellpappe-Produktionslinie gemäß Anspruch 1 oder 2, **dadurch gekennzeichnet, dass** die erste Pappe-Führungswalze (3) und die zweite Pappe-Führungswalze (31) ortsfest drehbar gelagert sind.

4. Vorrichtung zur Pappespeicherung und -entfernung für eine Brücke in einer Wellpappe-Produktionslinie gemäß einem der vorherigen Ansprüche, **dadurch gekennzeichnet, dass** die erste Pappe-Führungswalze (3) im Wesentlichen auf Höhe der Fördereinrichtung (2) angeordnet ist.

5. Vorrichtung zur Pappespeicherung und -entfernung für eine Brücke in der Wellpappe-Produktionslinie gemäß einem der vorherigen Ansprüche, **dadurch gekennzeichnet, dass** die zweite Pappe-Führungswalze (31) im Wesentlichen auf Höhe der Trennplatte (6) angeordnet ist.

6. Vorrichtung zur Pappespeicherung und -entfernung für eine Brücke in der Wellpappe-Produktionslinie gemäß einem der vorherigen Ansprüche, **dadurch gekennzeichnet, dass** die Förderband-Einrichtung (8) die taugliche einseitig kaschierte Wellpappebahn (11) fördert.

7. Vorrichtung zur Pappespeicherung und -entfernung für eine Brücke in der Wellpappe-Produktionslinie gemäß einem der vorherigen Ansprüche, **dadurch gekennzeichnet, dass** die Förderband-Einrichtung (8) nach einer Änderung deren Förderrichtung ein detektiertes fehlerhaftes Stück der einseitig kaschierten Wellpappebahn zu der Öffnung (207) bzw. der Klappe (7) transportiert.

8. Vorrichtung zur Pappespeicherung und -entfernung für eine Brücke in der Wellpappe-Produktionslinie gemäß Anspruch 7, **dadurch gekennzeichnet, dass** die Klemm- und Schneideinheit (5) das fehlerhafte Stück der einseitig kaschierten Wellpappebahn aus der einseitig kaschierten Wellpappebahn herausschneidet.

9. Vorrichtung zur Pappespeicherung und -entfernung für eine Brücke in der Wellpappe-Produktionslinie gemäß einem der vorherigen Ansprüche, **gekennzeichnet durch** eine Spleißeinrichtung (224) zum Verbinden tauglicher einseitig kaschierter Wellpappebahnen miteinander.

10. Vorrichtung zur Pappespeicherung und -entfernung für eine Brücke in der Wellpappe-Produktionslinie gemäß Anspruch 9, **dadurch gekennzeichnet, dass** die Spleißeinrichtung (224) zwischen einer aktiven Spleißstellung und einer inaktiven Stellung verstellbar ist, wobei in der aktiven Spleißstellung mindestens eine der tauglichen einseitig kaschierten Wellpappebahnen zum Anspleißen gehalten ist.

11. Verfahren zur Pappespeicherung und -entfernung für eine Brücke in einer Wellpappe-Produktionslinie, umfassend
- Bereitstellen einer Vorrichtung nach einem der vorherigen Ansprüche.

## Claims

1. Device for cardboard storage and removal for a bridge (100) in a corrugated cardboard production line, comprising a bridge (100) with a planar surface on the upper side,
wherein
a) a conveyor system (2) for conveying a single-sided laminated corrugated cardboard web (11) is arranged above the bridge (100), said system comprising a conveyor belt, running parallel to the planar surface, for conveying the single-sided laminated corrugated cardboard web (11) and has an entry end and an exit end where a clamping and cutting unit (5) is provided,
b) a first cardboard guide roll (3) and a second cardboard guide roll (31), which are arranged with a vertical gap between them, are provided outside of the exit end of the conveyor system (2) for conveying the single-sided laminated corrugated cardboard web (11),
c) a separating plate (6), which runs parallel to the direction of travel of the conveyor belt for conveying the single-sided laminated corrugated cardboard web (11), is provided below the conveyor system (2) for conveying the single-sided laminated corrugated cardboard web (11),
d) a movable cardboard storage carriage unit (4) is provided on the bridge (100) under the conveyor system (2) for conveying the single-sided laminated corrugated cardboard web (11) to form a sliding pair with the bridge (100), and
e) a drive system is connected to the movable cardboard storage carriage unit (4), which comprises a first cardboard storage roll (41) and a second cardboard storage roll (42), which are arranged with a vertical gap between them,
f) the first cardboard guide roll (3), the first cardboard storage roll (41), the second cardboard guide roll (31) and the second cardboard storage roll (42) are arranged one after the other along the vertical direction with a vertical gap between each of them,
g) a conveyor belt system (8) is provided in the bridge (100) under the movable cardboard storage carriage unit (4),
h) an opening is provided in the bridge (100) adjacent to one end of the conveyor belt system (8), and
i) a flap (7), under which a waste cardboard collecting carriage (9) is provided, is provided in the opening.

2. Device for cardboard storage and removal for a bridge in the corrugated cardboard production line according to claim 1, **characterised in that** the conveyor belt system (8) comprises a forward and reverse drive system.

3. Device for cardboard storage and removal for a bridge in the corrugated cardboard production line according to claim 1 or 2, **characterised in that** the first cardboard guide roll (3) and the second cardboard guide roll (31) are mounted stationarily and rotatably.

4. Device for cardboard storage and removal for a bridge in a corrugated cardboard production line according to any one of the preceding claims, **characterised in that** the first cardboard guide roll (3) is arranged essentially at the height of the conveyor system (2).

5. Device for cardboard storage and removal for a bridge in the corrugated cardboard production line according to any one of the preceding claims, **characterised in that** the second cardboard guide roll (31) is arranged essentially at the height of the separating plate (6).

6. Device for cardboard storage and removal for a bridge in the corrugated cardboard production according to any one of the preceding claims, **characterised in that** the conveyor belt system (8) conveys the usable single-sided laminated corrugated cardboard web (11).

7. Device for cardboard storage and removal for a bridge in the corrugated cardboard production line according to any one of the preceding claims, **characterised in that,** after a change in the conveying direction of the conveyor belt system (8), it transports a detected defective piece of the single-sided laminated corrugated cardboard web to the opening (207) or flap (7).

8. Device for cardboard storage and removal for a bridge in the corrugated cardboard production line according to claim 7, **characterised in that** the clamping and cutting unit (5) cuts the defective piece of the single-sided laminated corrugated cardboard web out of the single-sided laminated corrugated cardboard web.

9. Device for cardboard storage and removal for a bridge in the corrugated cardboard production line according to any one of the preceding claims, **characterised by** a splicing device (224) for joining usable single-sided laminated corrugated cardboard webs together.

10. Device for cardboard storage and removal for a bridge in the corrugated cardboard production line according to claim 9, **characterised in that** the splicing device (224) is displaceable between an active splicing position and an inactive position, wherein, in the active splicing position, at least one of the usable single-sided laminated corrugated cardboard webs is halted for splicing.

11. Method for cardboard storage and removal for a bridge in a corrugated cardboard production line, comprising
- the provision of a device according to any one of the preceding claims.

## Revendications

1. Dispositif de stockage et de retrait de carton pour un pont (100) dans une chaîne de production de carton ondulé, comprenant un pont (100) avec une surface plane sur la face supérieure,
dans lequel
a) un dispositif de transport (2) est disposé au-dessus du pont (100) pour le transport d'une bande de carton ondulé (11) laminée sur une face qui comprend une bande de transport s'étendant parallèlement par rapport à la surface plane pour le transport de la bande de carton ondulé (11) laminée sur une face et présentant une extrémité d'entrée et une extrémité de sortie, où une unité de serrage et de coupe (5) est prévue,
b) un premier rouleau de guidage du carton (3) et un second rouleau de guidage (31), qui sont disposés avec un écart vertical entre eux, sont prévus à l'extérieur de l'extrémité de sortie du dispositif de transport (2) pour le transport de la bande de carton ondulé (11) laminée sur une face,
c) une plaque de séparation (6), qui s'étend parallèlement par rapport au sens de déplacement de la bande de transport pour le transport de la bande de carton ondulé (11) laminée sur une face, est prévue en-dessous du dispositif de transport (2) pour le transport de la bande de carton ondulé (11) laminée sur une face,
d) une unité de stockage et de pesée de carton (4) mobile sur le pont (100) est prévue en-dessous du dispositif de transport (2) pour le transport de la bande de carton ondulé (11) laminée sur une face moyennant la formation d'un appariement coulissant avec le pont (100), et
e) un dispositif d'entraînement est en connexion avec l'unité de stockage et de pesée de carton (4) mobile, qui comprend un premier rouleau de stockage de carton (41) et un second rouleau de stockage de carton (42) qui sont agencés avec un écart vertical entre eux,
f) le premier rouleau de guidage de carton (3), le premier rouleau de stockage de carton (41), le second rouleau de guidage de papier (31) et le second rouleau de stockage de carton (42) sont disposés les uns à la suite des autres le long de la direction verticale avec un écart vertical entre eux,
g) un dispositif de bande de transport (8) est prévu dans le pont (100) en-dessous de l'unité de stockage et de pesée de carton (4) mobile,
h) un orifice est prévu dans le pont (100) au voisinage d'une extrémité du dispositif de bande de transport (8), et
i) un rabat (7) sous lequel est prévu un chariot de collecte de rebuts de carton (9), est prévu dans l'orifice.

2. Dispositif pour le stockage et le retrait de carton pour un pont dans une chaîne de production de carton ondulé selon la revendication 1, **caractérisé en ce que** le dispositif de bande de transport (8) comprend un dispositif d'entraînement vers l'avant et vers l'arrière.

3. Dispositif pour le stockage et le retrait de carton pour un pont dans une chaîne de production de carton ondulé selon la revendication 1 ou 2, **caractérisé en ce que** le premier rouleau de guidage de carton (3) et le second rouleau de guidage de carton (31) sont logés à un endroit fixe en étant rotatifs.

4. Dispositif pour le stockage et le retrait de carton pour un pont dans une chaîne de production de carton ondulé selon l'une des revendications précédentes, **caractérisé en ce que** le premier rouleau de guidage de carton (3) est disposé essentiellement à la même hauteur que le dispositif de transport (2).

5. Dispositif pour le stockage et le retrait de carton pour un pont dans une chaîne de production de carton ondulé selon l'une des revendications précédentes, **caractérisé en ce que** le second rouleau de guidage de carton (31) est disposé essentiellement à la même hauteur que la plaque de séparation (6).

6. Dispositif pour le stockage et le retrait de carton pour un pont dans une chaîne de production de carton ondulé selon l'une des revendications précédentes, **caractérisé en ce que** le dispositif de bande de transport (8) transporte la bande de carton ondulé (11) laminée sur une face de manière appropriée.

7. Dispositif pour le stockage et le retrait de carton pour un pont dans une chaîne de production de carton ondulé selon l'une des revendications précédentes, **caractérisé en ce que** le dispositif de bande de transport (8) transporte une pièce détectée défectueuse de la bande de carton ondulé laminée sur une face vers l'orifice (207), respectivement, le rabat (7) après une modification de sa direction de transport.

8. Dispositif pour le stockage et le retrait de carton pour un pont dans une chaîne de production de carton ondulé selon la revendication 7, **caractérisé en ce que** l'unité de serrage et de coupe (5) découpe la pièce défectueuse de bande de carton ondulé laminée sur une face à partir de la bande de carton ondulé laminée sur une face.

9. Dispositif pour le stockage et le retrait de carton pour un pont dans une chaîne de production de carton ondulé selon l'une des revendications précédentes, **caractérisé par** un dispositif de pose de ligature (224) pour relier ensemble des bandes de carton ondulé laminées sur une face de manière appropriée.

10. Dispositif pour le stockage et le retrait de carton pour un pont dans une chaîne de production de carton ondulé selon la revendication 9, **caractérisé en ce que** le dispositif de pose de ligature (224) est réglable entre une position de ligature active et une position de ligature inactive, où au moins une des bandes de carton ondulé laminée sur une face de manière appropriée est maintenue dans la position de ligature active pour la pose de la ligature.

11. Procédé de stockage et de retrait de carton pour un pont dans une chaîne de production de carton ondulé comprenant
- la mise à disposition d'un dispositif selon l'une des revendications précédentes.
